Europäisches Patentamt

European Patent Office

Office européen des brevets

(19)

(11) Publication number : **0 378 160 B1**

(12)

# EUROPEAN PATENT SPECIFICATION

(45) Date of publication of patent specification :
23.11.94 Bulletin 94/47

(51) Int. Cl.⁵ : **G11B 5/255**, G11B 5/127,
G11B 5/187, G11B 5/133

(21) Application number : 90100357.4

(22) Date of filing : 09.01.90

(54) **Magnetic head and method of producing the same.**

(30) Priority : 10.01.89 JP 3110/89
10.01.89 JP 3157/89
28.03.89 JP 77581/89

(43) Date of publication of application :
18.07.90 Bulletin 90/29

(45) Publication of the grant of the patent :
23.11.94 Bulletin 94/47

(84) Designated Contracting States :
DE FR GB

(56) References cited :
EP-A- 0 088 992
CH-A- 560 956
DE-A- 3 537 110
PATENT ABSTRACTS OF JAPAN vol. 11, no.
264 (P-610)(2711) 27 August 1987, & JP-A-62
67712 (MATSUSHITA ELECTRIC INDUSTRIAL
CO.) 27 March 1987,

(73) Proprietor : MATSUSHITA ELECTRIC
INDUSTRIAL CO., LTD.
1006, Oaza Kadoma
Kadoma-shi, Osaka-fu, 571 (JP)

(72) Inventor : Kugimiya, Koichi
1-32, Chokoji Minami-2-chome
Toyonaka-shi (JP)
Inventor : Hirota, Ken
24-G210, Kamishinden-1-chome
Toyonaka-shi (JP)
Inventor : Satomi. Mitsuo
52-4, Kisabe-6-chome
Katano-shi (JP)
Inventor : Omata, Yuuji
21-26, Namikico
Ibaraki-shi (JP)

(74) Representative : Patentanwälte Leinweber &
Zimmermann
Rosental 7/II Aufg.
D-80331 München (DE)

EP 0 378 160 B1

## Description

BACKGROUND OF THE INVENTION

The present invention relates to a method of producing a magnetic head, and a magnetic head.

Hitherto, ferrite has been widely used as the material of a magnetic head core, because of its superior workability and wear resistance. In general, however, ferrite has saturation magnetic flux density Bs which is about 30 to 50% lower than that exhibited by alloy materials and, therefore, cannot be satisfactorily used with current high-density recording medium having high level of coercive force. In order to obviate this problem, magnetic heads made of sendust or amorphous alloys, known as metal heads, as well as so-called metal-in-gap heads having sendust or amorphous alloys arranged in the vicinity of the head gap, are being put into practical use as magnetic heads usable together with magnetic recording mediums having high levels of recording density. The metal-in-gap head, however, involves a problem in regard to the tape sliding surface and, therefore, single-crystal ferrite has been used in combination with alloys as the material of the metal-in-gap head.

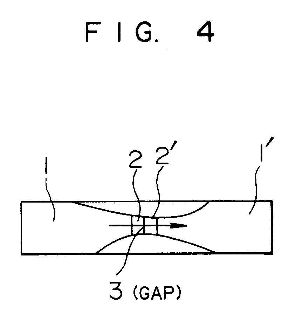

It has been found that such a metal-in-gap head exhibits a reduction in the head output level after a certain period of tape running, eg., 100 hours. Fig. 4 schematically shows the metal-in-gap head exhibiting a reduction in the output level. Numeral 1 and 2 denote, respectively, a ferrite portion and an alloy portion. A measurement (or a measurement by a surface profile-meter of difference in level) of the portion of the head indicated by an arrow in Fig. 4 showed that the alloy portion 2 has been recessed due to wear in an amount of several hundred angstrom ($\text{Å}$) from the surface level of the ferrite portion 1, thus proving the tendency of local uneven wear. A similar test was conducted on a metal head to find a significant difference in the amount of recessing between the alloy portion and the ceramic substrate, i.e., uneven wear, between the alloy portion and the ceramic substrate. It has thus been confirmed that the reduction in the head output level is attributable to a spacing loss caused by the uneven wear of the head.

The production of a metal-in-gap type magnetic head requires a heat treatment conducted at 500°C to 700°C for the purpose of fusing a bonding glass. This heat treatment causes a mutual diffusion of the materials at the interface between the ferrite and alloy portions. This diffusion is considered to produce so-called pseudo gap noise which causes an impediment of the recording/ reproducing apparatus.

It is also to be pointed out that metal-in-gap type magnetic heads exhibit higher level of sliding noise as compared with metal heads.

DE 35 37 110 A1 discloses a method for producing a magnetic head according to precharacterizing clause of claim 1.

What is known from EP 0 088 992 A3 is to provide a soft-magnetic material by bonding together a mass of powdery grains, to provide a coating around the grains, said coating containing iron oxide and/or an oxide of silicon, aluminium and/or titanium.

CH-A- 560 956 discloses a method for preparing a Fe Al Si alloy powder comprising a step of oxidising the powder in air at a temperature ranging from 232° to 343°C in order to increase the wear resistance of magnet poles produced from said powder by pressure at a temperature of about 1000°C.

SUMMARY OF THE INVENTION

Accordingly, an object of the present invention is to provide a metal-in-gap type magnetic head which is improved to suppress reduction in the head output level due to spacing loss caused by uneven wear of the head after a long running of a tape in sliding contact with the head.

A further object of the present invention is to prevent generation of pseudo-gap (or quasi-gap) noise in a metal-in-gap type magnetic head due to diffusion at the interface between the ferrite and alloy portions of the head.

Still another object of the present invention is to provide a magnetic head improved to reduce sliding noise.

According to the invention, the above objects are achieved by a method according to claim 1. A respective magnetic head is claimed in claim 4. Preferred embodiments are subject of the subclaims. The magnetic head is produced by a process having a step of effecting a heat treatment at a temperature not lower than 800°C and not higher than 1200°C in an atmosphere which contains oxygen as an impurity gas, so as to allow a phase of high oxygen concentration around the crystal grain boundary of the magnetic alloy material, thus attaining a wear resistance higher than that of the matrix phase of the magnetic alloy, thereby remarkably suppressing the undesirable uneven wear of the head.

Preferably, when assembling together the ferrite having high magnetic permeability and the magnetic alloy material so as to form a magnetic core with the magnetic alloy material disposed in the vicinity of the head gap, fine projections and recesses of a mean coarseness of 0.12 $\mu$m or greater are formed on the surfaces which provide the interface between the ferrite and the magnetic alloy.

It is also preferred that an anti-diffusion film is formed in the interface between the ferrite and the poly-crystalline magnetic alloy.

The anti-diffusion film preferably has a thickness which is not smaller than 50 Å (5nm) and not greater than 300 Å (30nm), and may be made of at least one Si compound selected from the group consisting of Si-O compounds system, Si-C compounds system, Si-N compounds system and Si-O-N compounds system, at least one Al compound selected from the group consisting of Al-O compounds system, Al-C compounds system, Al-N compounds system and Al-O-N compounds system, or at least one Fe-Si compound system selected from the group consisting of Fe-Si-O compounds system, Fe-Si-C compounds system, Fe-Si-N compounds system and Fe-Al-O compounds system.

Furthermore, in contrast to conventional ferrite head and other known heads which is made of single-crystal ferrite, the metal-in-gap type magnetic head of the present invention exhibits reduced level of sliding noise by virtue of various improvement measures such as introduction of metal, formation of pseudo gap and use of poly-crystalline ferrite which produces advantageous effects by the action of the grain boundary.

## BRIEF DESCRIPTION OF THE DRAWINGS

Figs. 1a to 1e are illustrations of steps of a process of producing a magnetic head as an embodiment of the present invention;

Fig. 2 is a front elevational view of a magnetic head having an anti-diffusion film;

Fig. 3 is an illustration of Auger (AES) profile at the region around the interface between the anti-diffusion film and ferrite, and the film and alloy; and

Fig. 4 is an illustration of a conventional magnetic head, showing particularly the state of uneven wear of the tape sliding surface for the purpose of explaining problems encountered with the known head.

## DESCRIPTION OF THE PREFERRED EMBODIMENTS

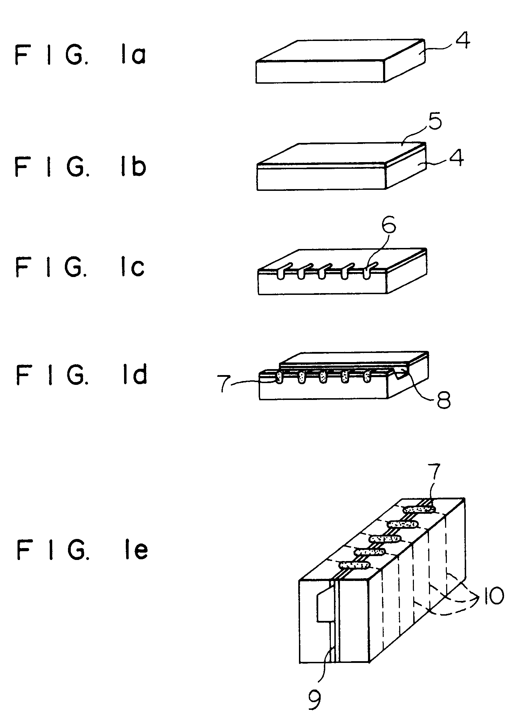

Examples of the magnetic head of the invention will be described hereinafter with reference to Figs. 1 to 3 of the accompanying drawings.

[Example 1]

A ferrite material 4 was prepared as the substrate. The ferrite material should have a high magnetic permeability, preferably 1000 or higher. In this case, an ordinary Mn-Zn ferrite having a composition containing 53 mol% of $Fe_2O_3$, 28 mol% of MnO and 19 mol% of ZnO was used as the ferrite material 4 of the substrate. Prepared also was a magnetic alloy material which was in this case a sendust alloy (Fe-Si-Al alloy) containing Al and Si which exhibits high affinity to oxygen. The substrate and the alloy material as a target were placed in a vessel which was evacuated to a level of $5 \times 10^{-7}$ Torr ($665 \times 10^{-7}$ Pa) and charged with Ar gas to a pressure of $1.5 \times 10^{-3}$ Torr ($200 \cdot 10^{-3}$ Pa). Then, a sputtering was conducted so as to sputter the sendust alloy 5 on the ferrite substrate 4 as shown in Fig. 1b. Then, after notches 6 are formed as shown in Fig. 1c, a heat treatment was conducted for 20 hours at 800°C to 1200°C in a nitrogen atmosphere containing 50 ppm of oxygen. Subsequently, the notches 6 were filled with glasses or bonding glass 7 and, after a winding window 8 was formed, the gap abutting surface was mirror-finished with a diamond paste. Then, a gap spacer material (not shown) was formed on the mirror-finished surface by sputtering, thus completing a half blank of the magnetic head core. A pair of such half blanks were bonded to form a gap 9 as shown in Fig. 1e, and the obtained bar was cut along the lines 10 of cutting, whereby plural heads were fabricated.

The heads thus fabricated were mounted on a VTR and tested in sliding contact with a tape. The amount of reduction in the head output and the extent of uneven wear, i.e., the difference in the wear amount between the ferrite portion and the magnetic alloy portions, were measured after 200 hours test run, the results being shown in Table 1 below.

## Table 1

| Heat treatment | Head output (dB) | Uneven wear Å |
|:---:|:---:|:---:|
| None | -3.5 | 500 |
| 800°C | -0.7 | 100 |
| 900°C | -0.3 | 50 |
| 1000°C | -1.0 | 150 |
| 1200°C | -1.0 | 150 |

*Note 1: The head output is shown in terms of reduction in dB from the heat output obtained immediately after the start of the test.

*Note 2: In each case, the heat treatment was conducted for 20 hours in nitrogen atmosphere containing 50 ppm of oxygen, after forming the notches in a manner shown in Fig. 1c.

According to the invention, the temperature of heat treatment is limited to range between 800°C and 1200°C. Heat treatment at temperatures below 800°C cannot provide sufficiently high wear resistance of the sendust alloy resulting in uneven wear, whereas heat treatment at temperatures above 1200°C impairs the magnetic characteristic due to growth of crystal grains of the sendust alloy and mutual diffusion of the sendust alloy and the ferrite. Thus, the heat treatment is preferably conducted at a temperature around 900°C.

Although the oxygen concentration is selected to be 50 ppm in this Example, an experiment showed that the invention can satisfactorily be carried out when the oxygen concentration falls between 1 ppm and 500 ppm. When the oxygen concentration is below 1 ppm, the diffusion of oxygen cannot be conducted satisfactorily, whereas, when the oxygen concentration exceeds 500 ppm, the surface of the magnetic head is undesirably oxidized. The heat-treating atmosphere may be a nitrogen gas atmosphere, an argon gas atmosphere, hydrogen gas atmosphere or vacuum, provided that it has oxygen concentration falling within the range specified above. It was also found that the sendust alloys having an Fe-Si-Al type composition provides an appreciable effect when the composition is determined not to impair the magnetic characteristic. The region which exhibits superior wear resistance is as small as about 100 microns or so in thickness as measured from the heat-treated surface. In the magnetic head of the present invention in which the sendust magnetic alloy is arranged in the vicinity of the head gap, the thickness of the sendust alloy portion quite conveniently does not exceed 100 microns even when the amount of grinding is taken into consideration. The heat treatment may be conducted at any time in the production process. Taking into account a reaction with the glass and in order to avoid any tendency for loosening of the head gap, the heat treatment is preferably conducted after forming notches as in this Example.

Unfortunately, the reason of improvement in the wear resistance has not been clarified yet. It is to be pointed out that an analysis of the alloy magnetic material portion of the magnetic alloy of the invention showed presence of a phase of high oxygen concentration near the crystal grain boundaries. The presence of a kind of sub-oxide generated in the region of the phase of high oxygen concentration, as well as Al having high affinity to oxygen, are considered to be the cause of the improvement in the wear resistance, although there is no precipitation of aluminium oxide in the form of $Al_2O_3$. It is thus understood that presence of a metallic element having high affinity to the oxygen is essential in the magnetic head of the present invention. In addition, an oxide of such a metallic element generally exhibits superior wear resistance and, hence, can be considered as having the same effect as that produced by this Example.

It was also found that convexities and concavities in the grain boundary not only reduce any drastic step but also remarkably reduce pseudo gap noise.

[Example 2]

Surfaces of single-crystal ferrite substrates were ground by diamond cups of various levels of coarseness to obtain mean surface roughnesses of 0.01 μm or below, 0.06 μm, 0.09 μm, 0.12 μm, 0.18 μm and 0.23 μm. Using an alloy material (Fe-Si-Al alloy), sputtering was conducted on these substrates in the same manner as Example 1, and samples of magnetic head were fabricated in the same process as Example 1.

The heads thus fabricated were mounted on a VTR and tested in sliding contact with a tape. The amount of reduction in the head output and the extent of uneven wear, i.e., the difference in the wear amount between the ferrite portion and the sendust alloy portions, as well as the levels of the pseudo gap noise, were measured after 200 hours test run, the results being shown in Tables 2 and 3 below.

Table 2

| Heat treatment | Head output (dB) | Uneven wear $\overset{\circ}{A}$ |
|---|---|---|
| None | -4.5 | 300 |
| 800°C | -0.6 | 50 |
| 900°C | -0.3 | 30 |
| 1000°C | -0.9 | 70 |

(Minimum recording wavelength 0.5 μm)

Table 3

| Coarseness (μm) | 0.01 | 0.06 | 0.09 | 0.12 | 0.18 | 0.23 |
|---|---|---|---|---|---|---|
| N (dB) | 10 | 12 | 18 | 22 | 29 | 34 |

*Note 1:  The head output is shown in terms of reduction in dB from the head output obtained immediately after the start of the test.

*Note 2:  "N" denotes the pseudo gap noise

A comparison between the data shown in Table 2 with those shown in Table 1 proves that the roughening of the surfaces providing the interfaces alone offers a remarkable effect in the reduction of the uneven wear, and this effect is further enhanced as a result of the heat treatment.

From Table 3, it will be seen that a noise level of 22 dB, which is practically acceptable for so-called DAT (Digital Audio Tape-Recorder), is obtainable when the mean surface roughness is 0.12 μm or greater. In addition, a noise level of 30 dB, which is practically acceptable for video heads, is obtained when the roughness is 0.2 μm or greater. It is also clear that a remarkable improvement is achieved also in the amount of uneven wear, by virtue of the partial oxidation.

An analysis of the alloy portion of the metalin-gap type alloy of this Example proved presence of phase having high oxygen concentration in the region near the crystal grain boundaries as in the case of Example 1. It is thus understood that Example 2 offers advantages similar to those derived from Example 1.

[Example 3]

Samples of magnetic head were fabricated by the same process as Example 2, using, as the poly-crystalline ferrites having high magnetic permeability, an Mn-Zn poly-crystalline ferrites having compositions containing 52 mol% of $Fe_2O_3$, 24 mol% of $MnO_2$ and 24 mol% of ZnO. The mean grain sizes were 1 $\mu$m, 3 $\mu$m, 5 $\mu$m, 8 $\mu$m and 12 $\mu$m. After the grinding, etching was effected with hot phosphoric acid, so that fine convexities and concavities of sizes corresponding to the grain sizes were formed. More specifically, the levels of coarseness in relation to the grains sizes were: 0.16/1, 0.42/3, 0.6/5, 0.81/8, 1.1/12, where numerals appearing on the left side of slash (/) represent the surface coarseness in terms of $\mu$m, while numerals appearing on the right side of slash (/) represent mean grain size in terms of $\mu$m. Results of measurement of noises showed that a reduction in the pseudo gap noise in an amount not smaller than 20 dB is obtainable when the surface roughness is 0.12 $\mu$m or greater, thus proving an excellent performance.

The sliding noise of the metal-in-gap head also was measured. While the metal-in-gap noise of Example 2 showed a noise level of about -1.5 dB with respect to the initial noise level, samples of Example 3 showed a greater amounts of reduction in the sliding nozzle, i.e., -3.5 dB, -3 dB, -3.2 dB, -2.5 dB and -2.8 dB with respect to the initial level of the sliding noise. The mean value of the sliding noise was about -3 dB. This remarkable effect in the reduction of the sliding noise level owes to multiplication of the effects such as the effect produced by the grain boundaries in the poly-crystalline ferrite, effect produced by alloy/ferrite interface and effect produced by heat-treatment.

Thus, in Example 3 of the invention, a superior effect is produced by virtue of the roughening of the interface.

[Example 4]

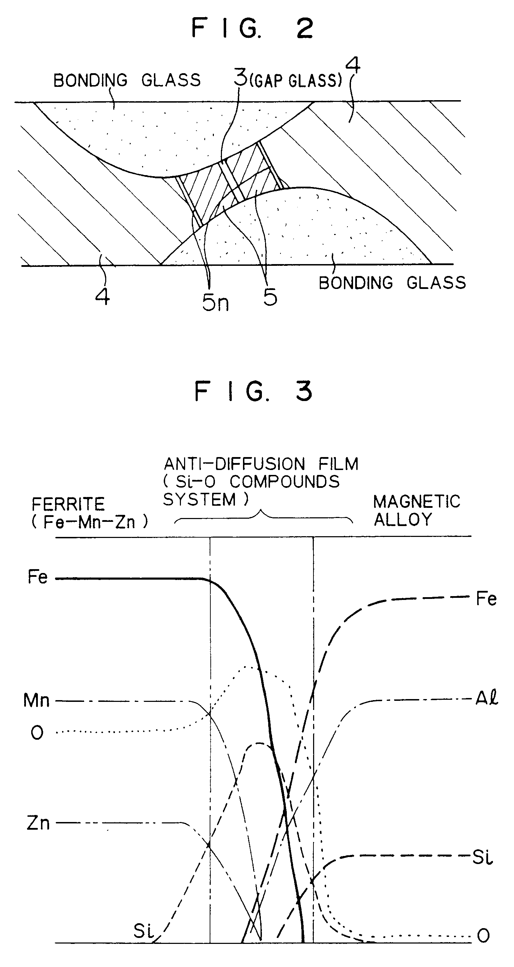

The same ferrite material 4 as that used in Example 1 were used as the material of substrates, together with an alloy (Fe-Al alloy) as the target. The sample substrate and the target were placed in a vessel which was evacuated to a pressure of 5 x $10^{-7}$ Torr and then charged with Ar gas to a pressure of 1.5 x $10^{-3}$ Torr (200·$10^{-3}$ Pa). Subsequently, a diffusion prevention film 5n of SiN was formed by sputtering as an anti-diffusion film on the ferrite material 4 of the substrate, followed by further sputtering with a sendust alloy 5. Then, samples of magnetic head having a gap filled with glass (or gap glass) 3 (see Fig. 2) were fabricated by the same process as preceding Examples.

The heads thus fabricated were mounted on a VTR and tested in sliding contact with a tape. The amount of reduction in the head output and the extent of uneven wear, i.e., the difference in the wear amount between the ferrite portion and the magnetic alloy portions, were measured after 200 hours test run, the results being shown in Table 4 below.

Table 4

| Heat treatment | Head output (dB) | Uneven wear Å |
|---|---|---|
| None | -3.5 | 500 |
| 800°C | -0.7 | 100 |
| 900°C | -0.3 | 50 |
| 1000°C | -1.0 | 150 |
| 1200°C | -1.5 | 150 |

*Note 1: The head output is shown in terms of reduction in dB from the heat output obtained immediately after the start of the test.

*Note 2: In each case, the heat treatment was conducted for 20 hours in nitrogen atmosphere containing 50 ppm of oxygen, after forming the notches in a manner shown in Fig. 1c.

As will be seen from Table 4, Example 4 provides the same effect as Example 1, thus proving remarkable wear resistance and superior reproducibility.

An analysis of the alloy portion of the head in accordance with the present invention showed presence of a phase of a high oxygen concentration in the region around the crystal grain boundaries. A surface etching with oxygen plasma distinctively showed grain boundaries, thus proving segregation of oxygen. It is thus clear that the region of a high oxygen concentration contributes to an improvement in the wear resistance.

Measurement of the pseudo gap noise showed that the samples of Example 4 having the anti-diffusion films exhibit an improvement in amount of about 12 dB as compared with those having no anti-diffusion film. An experiment showed that a similar effect is obtainable when the thickness of the anti-diffusion film is 50 Å or greater. Excessively large thicknesses, e.g., 300 Å or greater, are not recommended because such large thicknesses approach the minimum recording wavelength.

Fig. 3 shows the effect of provision of an anti-diffusion film which is formed of one of Si-O compounds system. Especially, the effect is apparent from the curves of Al, Si and oxygen which show the change of chemical composition of the mentioned elements.

The following is the investigation results of samples of cobalt-base alloys comprising Nb and/or Zr which are expected to prove remarkably the above-mentioned effect.

The effect of provision of the anti-diffusion films were analyzed by means of SIMS. No substantial mutual diffusion was observed both in the alloys rich in Nb and alloys rich in Zr, whereas samples devoid of anti-diffusion film showed considerable mutual diffusion between the ferrite and the magnetic alloy. It is considered that any material capable of preventing mutual diffusion between the ferrite and the magnetic alloy material and stable enough to prevent reaction or diffusion between itself and these magnetic materials can be used as the material of the anti-diffusion film. The effect of provision of the anti-diffusion film is exhibited by the fact that the bonding of oxygen with Nb and/or Zr is very small despite the high affinity of these elements to oxygen.

A similar superior effect was obtained also when the anti-diffusion film and the poly-crystalline alloy film were alternatingly laminated.

It is thus possible to obtain a magnetic head having a stable performance, i.e., a smaller reduction in the head output level, as well as reduced pseudo gap noise.

The improvement in the performance, in particular the reduction in the pseudo gap noise, is attributable to the presence of the anti-diffusion film.

[Example 5]

The same examination and evaluation as those in preceding Examples were conducted using other materials. It was confirmed that a $SiO_2$ thin film, a $TaO_2$ thin film, an Al compound thin film, an Fe-Si compound thin film and an Fe-Al compound thin film, each of which contains a metal element having high affinity to oxygen, are capable of effectively reducing the pseudo gap noise. These films were formed by conducting sputtering in atmospheres such as $Ar-O_2$, $Ar-N_2$, $Ar-O_2-N_2$, $Ar-O_2-N_2$, $Ar-CH_4$, using the respective metals or alloys as targets. The concentrations of gases mixed with Ar were 15%.

Samples having $SiO_2$ films, having a thickness which is not smaller than 50 Å and not greater than 300 Å, deposited on the interfaces showed about -30 dB pseudo gap noise in contrast to samples having no such $SiO_2$ film, thus proving improvement in amount of about 5 dB.

Samples were prepared by sputtering interfaces with Al metal so as to form compound films of $Al_2O_3$, AlN, Al-(O, N) and Al-C. In an X-ray diffraction examination, these films merely showed fine crystalline states but no distinctive crystalline layer. An experiment showed, however, that about 5 to 8 dB reduction in the pseudo gap noise is obtainable by forming such compound films on the interfaces.

Sputtering also was executed by using an Fe-Al alloy in the above-mentioned four types of sputtering atmospheres. Films of fine crystalline structures similar to those obtained with Al were formed in this case, and it was confirmed also that about 6 to 7 dB reduction in the pseudo gap noise is attainable by virtue of presence of such fine crystalline film.

The same advantage was observed when sputtering was conducted with an Fe-Si alloy. In this case, the amount of improvement in the reduction of the pseudo gap noise was about 4 to 6 dB.

The interfaces of these compound films were examined and diffusion prevention effect substantially the same as those in Fig. 3 was confirmed.

[Example 6]

The levels of sliding noise were measured in a metal-in-gap head produced by using the single-crystal ferrite of Example 4 and in a metal-in-gap head produced in the same manner as Example 4 employing the poly-crystalline ferrite used in Example 3. The measured levels of sliding noise were evaluated using, as the reference, the level of the sliding nozzle exhibited by the single crystal ferrite metal-in-gap head of Example 4, i.e., by setting the level of the head of Example 4 to be 0 dB. The samples of the poly-crystalline ferrite metal-in-gap head showed about 1 to 1.5 dB reduction in the sliding noise level, which is substantially equivalent to those of metal heads. It is thus understood that the metal-in-gap type heads of the present invention making use of poly-crystalline ferrite has superior characteristics which well compare with those exhibited by metal heads.

The heat treatment in the process of producing the magnetic head was conducted at a temperature not higher than 1000°C in the above-described examples. We can select, however, the heat treatment temperature not higher than 1200°C by selecting a suitable gaseous atmosphere of the heat treatment.

## Claims

1. A method of producing a magnetic head comprising a magnetic core formed from a pair of substrates consisting of a ferrite of a high magnetic permeability and provided with a magnetic Al-Si-Fe alloy layer said pair being arranged adjacent to form a head gap of the magnetic head therebetween, comprising the step of sputtering said alloy layer (5) directly of non-directly onto said ferrite substrate (4) to produce a blank of said head, characterized by a step of conducting a heat treatment on said blank at a temperature which is not lower than 800°C and which is not higher than 1200°C, within an atmosphere which contains oxygen as an impurity gas.

2. A method according to claim 1, comprising the steps of: roughening the surface of said ferrite of high magnetic permeability constituting the interface between said ferrite and said magnetic alloy to a mean roughness of 0.12 μm or greater; and forming a layer of said magnetic alloy material on the roughened surface so as to arrange said layer of magnetic alloy adjacent the head gap.

3. A method of producing a magnetic head according to claim 2, wherein said roughening is effected by grind-

EP 0 378 160 B1

ing or chemical etching.

4. A magnetic head obtained from the method according to claim 1 comprising a magnetic core formed from a pair of substrates consisting of a ferrite of a high magnetic permeability and provided with a sputtered magnetic Al-Si-Fe alloy material said pair being arranged adjacent to form a head gap of the magnetic head therebetween, wherein there exist portions of high oxygen concentration at only a region around each crystal-grain boundary of said magnetic alloy material.

5. A magnetic head according to claim 4, wherein fine concavities and convexities of a mean coarseness of 0.12 $\mu$m or greater exist in the interface between said ferrite of high magnetic permeability and said magnetic alloy material.

6. A magnetic head according to claim 5, wherein a phase of high oxygen concentration exists in the vicinity of grain boundaries of said magnetic alloy material.

7. A magnetic head according to any one of claims 4 to 6, wherein said ferrite of high magnetic permeability is a sintered body having a mean grain size which is not greater than 5 $\mu$m.

8. A magnetic head according to any one of claims 4 to 7 wherein an anti-diffusion film having a thickness not greater than 30 nm is formed in the interface between the ferrite of high magnetic permeability and the magntic alloy material.

9. A magnetic head according to any one of claims 4 to 7, and 8 further comprising an anti-diffusion film of a Si compound having a thickness not smaller than 5 nm and not greater than 30 nm formed in the interface between said ferrite of high magnetic permeability and said magnetic alloy material, said Si compound being at least one selected from a group consisting of an Si-O compound system, an Si-C compound system, and Si-N compound system and an Si-O-N compound system.

10. A magnetic head according to any one of claims 4 to 7, and 8, further comprising an anti-diffusion film of an Fe-Si- compound having a thickness not smaller than 5 nm and not greater than 50 nm formed in the interface between said ferrite of high magnetic permeability and said magnetic alloy material, said Fe-Si compound being at least one selected from a group consisting of an Fe-Si-O compound system, and Fe-Si-C compound system, an Fe-Si-N compound system and an Fe-Si-O-N compound system.

11. A magnetic head according to any one of claims 4 to 7, and 8, further comprising an anti-diffusion film of an Al compound having a thickness not smaller than 5 nm and not greater than 50 nm formed in the interface between said ferrite of high magnetic permeability and said magnetic alloy material, said Al compound being at least one selected from a group consisting of an Al-O compound system, an Al-C compound system, and Al-N compound system and an Al-O-N compound system.

12. A magnetic head according to any one of claims 4 to 7, and 8, further comprising an anti-diffusion film of an Fe-Al-O system and/or Fe-Al-N compound system having a thickness not smaller than 5 nm and not greater than 50 nm formed in the interface between said ferrite of high magnetic permeability and said magnetic alloy material.

**Patentansprüche**

1. Verfahren zum Herstellen eines Magnetkopfes mit einem magnetischen Kern, der aus einem Paar aus einem Ferrit hoher magnetischer Permeabilität bestehender Substrate gebildet ist und mit einer magnetischen Al-Si-Fe-Legierungsschicht versehen ist, wobei das Paar benachbart angeordnet ist, um einen Kopfspalt des Magnetkopfes dazwischen zu bilden, mit dem Schritt des Sputterns der Legierungsschicht (5) unmittelbar oder mittelbar auf das Ferritsubstrat (4), um einen Rohling des Kopfes herzustellen, gekennzeichnet durch einen Schritt des Durchführens einer Wärmebehandlung des Rohlings bei einer Temperatur, die nicht geringer als 800°C und nicht höher als 1200°C ist, und zwar innerhalb einer Atmosphäre, die Sauerstoff als ein Verunreinigungsgas beinhaltet.

2. Verfahren nach Anspruch 1, mit den Schritten des Aufrauhens derjenigen Oberfläche des Ferrits hoher magnetischer Permeabilität, die die Grenzfläche zwischen dem Ferrit und der magnetischen Legierung

9

darstellt, und zwar mit einer mittleren Rauhigkeit von 0,12 μm oder mehr, und des Ausbildens einer Schicht des magnetischen Legierungsmaterials auf der aufgerauhten Oberfläche, um die Schicht magnetischer Legierung benachbart dem Kopfspalt anzuordnen.

3. Verfahren zum Herstellen eines Magnetkopfes nach Anspruch 2, bei dem das Aufrauhen durch Schleifen oder durch chemisches Ätzen bewirkt wird.

4. Magnetkopf, hergestellt nach dem Verfahren nach Anspruch 1, mit einem magnetischen Kern, der hergestellt ist aus einem Paar Substrate aus einem Ferrit hoher magnetischer Permeabilität und versehen mit einem gesputterten magnetischen Al-Si-Fe-Legierungsmaterial, wobei das Paar benachbart angeordnet ist, um einen Kopfspalt des magnetischen Kopfes dazwischen auszubilden, wobei Abschnitte hoher Sauerstoffkonzentration nur in einem Bereich um jede Kristallkorngrenze des magnetischen Legierungsmaterials herum existieren.

5. Magnetkopf nach Anspruch 4, bei dem feine Konkavitäten und Konvexitäten einer mittleren Rauhigkeit von 0,12 μm oder mehr in der Grenzfläche zwischen dem Ferrit hoher magnetischer Permeabilität und dem magnetischen Legierungsmaterial existieren.

6. Magnetkopf nach Anspruch 5, bei dem eine Phase hoher Sauerstoffkonzentration in der Nähe der Korngrenzen des magnetischen Legierungsmaterials existieren.

7. Magnetkopf nach einem der Ansprüche 4 bis 6, bei dem das Ferrit hoher magnetischer Permeabilität ein gesinterter Körper ist, der eine mittlere Korngröße von nicht mehr als 5 μm hat.

8. Magnetkopf nach einem der Ansprüch 4 bis 7, bei dem ein Antidiffusionsfilm mit einer Dicke von nicht mehr als 30 nm in der Grenzfläche zwischen dem Ferrit hoher magnetischer Permeabilität und dem magnetischen Legierungsmaterial ausgebildet ist.

9. Magnetkopf nach einem der Ansprüche 4 bis 7 und 8, ferner aufweisend einen Antidiffusionsfilm einer Si-Verbindung mit einer Dicke von nicht weniger als 5 nm und nicht mehr als 30 nm, ausgebildet in der Grenzfläche zwischen dem Ferrit hoher magnetischer Permeabilität und dem magnetischen Legierungsmaterial, wobei die Si-Verbindung mindestens eine Ausgewählte aus einer Gruppe ist, die besteht aus einem Si-O-Verbindungssystem, einem Si-C-Verbindungssystem, einem Si-N-Verbindungssystem und einem Si-O-N-Verbindungssystem.

10. Magnetkopf nach einem der Ansprüche 4 bis 7 und 8, ferner aufweisend einen Antidiffusionsfilm einer Fe-Si-Verbindung mit einer Dicke von nicht weniger als 5 nm und nicht mehr als 50 nm, ausgebildet in der Grenzfläche zwischen dem Ferrit hoher magnetischer Permeabilität und dem magnetischen Legierungsmaterial, wobei die Fe-Si-Verbindung mindestens eine Ausgewählte aus einer Gruppe ist, die besteht aus einem Fe-Si-O-Verbindungssystem, einem Fe-Si-C-Verbindungssystem, einem Fe-Si-N-Verbindungssystem und einem Fe-Si-O-N-Verbindungssystem.

11. Magnetkopf nach einem der Ansprüche 4 bis 7 und 8, ferner aufweisend einen Antidiffusionsfilm aus einer Al-Verbindung mit einer Dicke von nicht weniger als 5 nm und nicht mehr als 50 nm, ausgebildet in der Grenzfläche zwischen dem Ferrit hoher magnetischer Permeabilität und dem magnetischen Legierungsmaterial, wobei die Al-Verbindung mindestens eine Ausgewählte aus einer Gruppe ist, die besteht aus einem Al-O-Verbindungssystem, einem Al-C-Verbindungssystem und Al-N-Verbindungssystem und einem Al-O-N-Verbindungssystem.

12. Magnetkopf nach einem der Ansprüche 4 bis 7 und 8, ferner aufweisend einen Antidiffusionsfilm eines Fe-Al-O-Systems und/oder eines Fe-Al-N-Verbindungssystems mit einer Dicke von nicht weniger als 5 nm und nicht mehr als 50 nm, ausgebildet in der Grenzfläche zwischen dem Ferrit hoher magnetischer Permeabilität und dem magnetischen Legierungsmaterial.

## Revendications

1. Procédé de fabrication d'une tête magnétique comprenant un noyau magnétique formé d'une paire de substrats en ferrite de haute perméabilité magnétique, garnis d'une couche d'alliage Al-Si-Fe magnétique, ces substrats étant adjacents de manière à former entre eux un entrefer de la tête magnétique, comprenant les étapes consistant à appliquer directement ou non directement ladite couche d'alliage (5) sur ledit substrat de ferrite (4) par pulvérisation cathodique pour produire un entrefer de ladite tête, caractérisé par une étape consistant à soumettre ledit entrefer à un traitement thermique à une température qui n'est pas inférieure à 800°C et qui n'est pas supérieure à 1200°C, dans une atmosphère qui contient de l'oxygène en tant qu'impureté gazeuse.

2. Procédé selon la revendication 1, comprenant les étapes consistant à rendre rugueuse la surface de ladite ferrite de haute perméabilité magnétique constituant l'interface entre ladite ferrite et ledit alliage magnétique, à une rugosité de 0,12 µm ou plus; et à former une couche dudit alliage magnétique sur la surface rendue rugueuse, de sorte que ladite couche d'alliage magnétique soit adjacente à l'entrefer de la tête.

3. Procédé de fabrication d'une tête magnétique selon la revendication 2, dans lequel ladite rugosité est formée par meulage ou par attaque chimique.

4. Tête magnétique obtenue par le procédé selon la revendication 1, comprenant un noyau magnétique formé d'une paire de substrats en ferrite de haute perméabilité magnétique, garnis par pulvérisation cathodique d'une couche d'alliage Al-Si-Fe magnétique, ces substrats étant adjacents de manière à former entre eux un entrefer de la tête magnétique, tête dans laquelle il n'existe des zones de forte concentration en oxygène que dans une région autour de chaque limite de grain cristallin dudit alliage magnétique.

5. Tête magnétique selon la revendication 4, dans laquelle de fines concavités et convexités, d'une rugosité moyenne de 0,12 µm ou plus, existent dans l'interface entre ladite ferrite de haute perméabilité magnétique et ledit alliage magnétique.

6. Tête magnétique selon la revendication 5, dans laquelle une phase de forte concentration en oxygène existe au voisinage de limites de grain dudit alliage magnétique.

7. Tête magnétique selon l'une quelconque des revendications 4 à 6, dans laquelle ladite ferrite de haute perméabilité magnétique est un corps fritté ayant une grosseur moyenne de grains qui n'est pas supérieure à 5 µm.

8. Tête magnétique selon l'une quelconque des revendications 4 à 7, dans laquelle un film anti-diffusion, ayant une épaisseur non supérieure à 30 nm, est formé à l'interface entre la ferrite de haute perméabilité magnétique et l'alliage magnétique.

9. Tête magnétique selon l'une quelconque des revendications 4 à 7 et 8, comprenant en outre un film anti-diffusion d'un composé de Si ayant une épaisseur non inférieure à 5 nm et non supérieure à 30 nm, formé à l'interface entre ladite ferrite de haute perméabilité magnétique et ledit alliage magnétique, ledit composé de Si étant au moins un composé choisi dans un groupe constitué par un système de composés de type Si-O, un système de composés de type Si-C, un système de composés de type Si-N et un système de composés de type Si-O-N.

10. Tête magnétique selon l'une quelconque des revendications 4 à 7 et 8, comprenant en outre un film anti-diffusion d'un composé de Fe-Si ayant une épaisseur non inférieure à 5 nm et non supérieure à 50 nm, formé à l'interface entre ladite ferrite de haute perméabilité magnétique et ledit alliage magnétique, ledit composé de Fe-Si étant au moins un composé choisi dans un groupe constitué par un système de composés de type Fe-Si-O, un système de composés de type Fe-Si-C, un système de composés de type Fe-Si-N et un système de composés de type Fe-Si-O-N.

11. Tête magnétique selon l'une quelconque des revendications 4 à 7 et 8, comprenant en outre un film anti-diffusion d'un composé de Al ayant une épaisseur non inférieure à 5 nm et non supérieure à 50 nm, formé à l'interface entre ladite ferrite de haute perméabilité magnétique et ledit alliage magnétique, ledit composé de Al étant au moins un composé choisi dans un groupe constitué par un système de composés de type Al-O, un système de composés de type Al-C, un système de composés de type Al-N et un système de composés de type Al-O-N.

12. Tête magnétique selon l'une quelconque des revendications 4 à 7 et 8, comprenant en outre un film anti-diffusion d'un système de composés de type Fe-Al-O et/ou d'un système de composés de type Fe-Al-N, ayant une épaisseur non inférieure à 5 nm et non supérieure à 50 nm, formé à l'interface entre ladite ferrite de haute perméabilité magnétique et ledit alliage magnétique.

F I G. Ia

4

F I G. Ib

5
4

F I G. Ic

6

F I G. Id

7

8

F I G. Ie

7

10

9

# F I G. 2

BONDING GLASS    3 (GAP GLASS)    4

BONDING GLASS

4    5n    5

# F I G. 3

ANTI-DIFFUSION FILM
( Si-O COMPOUNDS
SYSTEM )

FERRITE
( Fe-Mn-Zn )

MAGNETIC
ALLOY

Fe

Fe

Mn

Al

O

Zn

Si

Si

O

F I G. 4